# EUROPÄISCHE PATENTSCHRIFT

(11) **EP 2 679 505 B1**
(45) Veröffentlichungstag und Bekanntmachung des Hinweises auf die Patenterteilung: **06.05.2015**
(21) Anmeldenummer: 12004769.1
(22) Anmeldetag: 26.06.2012
(51) Int. Cl.: B65C 9/18

(54) **Etikettiervorrichtung mit Transportband**
Labelling device with conveyor belt
Dispositif d'étiquetage avec bande de transport

(43) Veröffentlichungstag der Anmeldung: 01.01.2014
(73) Patentinhaber: MULTIVAC Marking & Inspection GmbH & Co. KG, 32130 Enger (DE)
(72) Erfinder: Frank, Hendrik, Dr., 32130 Enger (DE); Siegenbrink, Daniel, 33617 Bielefeld (DE); Austermeier, Georg, 33161 Hövelhof (DE); Dauwe, Markus, 49176 Hilter (DE)
(74) Vertreter: Grünecker Patent- und Rechtsanwälte PartG mbB

(56) Entgegenhaltungen:
- EP-A1- 2 067 702
- DE-A1- 10 223 234
- DE-A1-102007 009 152
- DE-A1-102009 058 261
- DE-B3-102007 033 628

## Beschreibung

Die Erfindung bezieht sich auf eine Etikettiervorrichtung mit den Merkmalen des Anspruchs 1.

Aus der WO 03/099951A2 ist eine mikrostrukturierte Oberfläche mit gesteigerter Adhäsion bekannt, die eine Vielzahl von elastischen Vorsprüngen aufweist. Diese Oberfläche haftet nach der sogenannten Van-der-Waals-Wechselwirkung an anderen Objekten. Die DE 10 2010 044 660 A1 offenbart eine verbesserte Ausführung von Vorsprüngen, die die Anhaft- und die Ablöseeigenschaft weiter verbessert. Beide Dokumente sind jedoch ohne jeglichen Bezug zur Etikettiertechnik.

Die DE 10 228 243 A1 der Anmelderin selbst offenbart einen Querbahnetikettierer mit einem Saugkasten, der wenigstens einen Lüfter umfasst, der für einen Unterdruck am Etikettentransportband sorgt, um Etiketten mit ihrer nicht-klebenden Oberseite auf der Unterseite des Etikettentransportband beim Transport halten zu können. Lüfter sind aus hygienischen Gesichtspunkten nicht immer vorteilhaft.

Die EP 2 067 702 A1 offenbart einen Etikettierautomat gemäß dem Oberbegriff von Anspruch 1 für Linerless-Etiketten und aus der DE 10 2007 009 152 A1 ist eine Etikettiervorrichtung für Behälter bekannt, bei der Etiketten an Haftzylindern mittels Van-der-Waal schen Kräften gehalten und transportiert werden.

Die DE 10 2007 033 628 A1, ebenso von der Anmelderin, offenbart eine Etikettiervorrichtung zum Aufbringen von einem Satz Etiketten, die in mehreren Reihen und mehreren Spuren auf einem Transferband, welches eine Silikonbeschichtung aufweist, gespendet werden, um beispielsweise den Satz von Etiketten bei laufendem Vorzug auf die Packungen einer Tiefziehverpackungsmaschine aufzubringen. Dabei stehen die Etiketten mit ihrer Klebeseite mit dem Transferband in Kontakt. Durch die unterschiedlichen Klebekräfte und den sich laufend verändernden Verschmutzungsgrad der Silikonbeschichtung des Transferbands ändern sich die Haftbedingungen ständig und darunter leidet die Prozesssicherheit, da Etiketten während der Transportbewegung nicht sicher auf der Silikonbeschichtung haften oder im Gegenteil stärker als gewünscht haften, so dass sie auf der Silikonbeschichtung kleben bleiben und nicht auf die Packung aufgebracht werden.

Aufgabe der vorliegenden Erfindung ist es, eine verbesserte Etikettiervorrichtung zur Verfügung zu stellen.

Diese Aufgabe wird gelöst durch eine Etikettiervorrichtung mit den Merkmalen des Anspruchs 1. Vorteilhafte Weiterbildungen der Erfindung sind in den Unteransprüchen angegeben.

Die erfindungsgemäße Etikettiervorrichtung umfasst eine Spendeeinheit und eine Übertragungseinheit mit wenigstens einem Etikettentransportband zum Aufbringen eines Etiketts auf ein Produkt und zeichnet sich dadurch aus, dass das Etikettentransportband eine Haftkraft aufweist, um Etiketten mit ihrer nicht-klebenden Oberseite auf der Oberfläche des Etikettentransportbands aufnehmen und transportieren zu können. Dies bringt den Vorteil der Unabhängigkeit von unterschiedlichen Klebeeigenschaften der Etiketten, und der Einfluss einer durch Kleberreste verursachten Verschmutzung der Oberfläche des Etikettentransportbands auf die Hafteigenschaften entfällt. Gleichzeitig kann auf einen mittels Lüfter erzeugten Unterdruck in der Übertragungseinheit verzichtet werden, welches die Konstruktion und den Aufbau einer solchen Übertragungseinheit bzw. Etikettiervorrichtung stark vereinfacht. Das dadurch stark verringerte Eigengewicht der Übertragungseinheit ermöglicht eine eigene Bewegung hin zum Produkt, um die Etiketten aufzubringen und anzudrücken. In diesem Fall kann auf bewegbare Schieberplatten, wie sie aus dem Stand der Technik bekannt sind, verzichtet werden.

Bevorzugt ist die Haftkraft des Etikettentransportbands auf Basis von Van-der-Waals-Kräften vorgesehen, um die nicht-klebende Seite eines Etiketts ohne Unterdruck am Etikettentransportband positionsgenau transportieren zu können. Positionsgenau bedeutet, dass sich die Position des Etiketts nicht durch Gewichtskräfte oder Trägheitskräfte in Bezug auf seine Lage gegenüber dem Etikettentransportband verändert.

Es ist eine nano- oder mikrostrukturierten Beschichtung als Oberfläche des Etikettentransportbands vorgesehen. Unter einer nanostrukturierten Beschichtung wird im Sinne der Erfindung eine Beschichtung mit Oberflächenstrukturen mit Größen im Bereich von 100 nm oder kleiner verstanden. Unter einer mikrostrukturierten Beschichtung wird eine Beschichtung verstanden, die Oberflächenstrukturen mit einer Größe im Bereich von 0,1 µm bis 100 µm aufweist. Bei diesen Oberflächenstrukturen kann es sich um die Köpfe oder Spitzen von Haftelementen handeln, wobei die angegebene Dimension beispielsweise den Durchmesser oder den Krümmungsradius der Spitzen oder der Köpfe der Haftelemente angibt.

Die durch die nano- oder mikrostrukturierte Beschichtung erzeugte Hafteigenschaft ermöglicht sowohl ein Anhaften von Etiketten mit ihrer klebenden, als auch mit ihrer nicht-klebenden Seite. Die Hafteigenschaft ermöglicht auch einen Transport von Etiketten auf der Unterseite eines Untertrums des Etikettentransportbands, ohne dass die Etiketten mittels Unterdruck an dem Etikettentransportband gehalten werden müssen.

Vorzugsweise weist die mikrostrukturierte Beschichtung des Etikettentransportbands eine Oberfläche mit mehr als 15.000 Haftelementen pro cm², vorzugsweise mehr als 25.000 Haftelementen pro cm², auf. Diese Ausführung ist besonders geeignet, um glatte Oberflächen, wie sie beispielsweise bei bedruckten Etiketten an ihrer nicht-klebenden Oberseite bzw. Sichtseite vorhanden sind, an der Beschichtung haften zu lassen. Gleichzeitig gewährt die Beschichtung ein leichtes Abgeben oder Ablösen von Etiketten mittels Abschälen an einer Umlenkung, da sich an einer Umlenkung die Abstände zwischen den Haftelementen ändern und die Etiketten dort nach und nach von den Haftelementen gelöst werden.

Die Beschichtung ist eine Silikonbeschichtung und ist damit sowohl leicht reinigbar, als auch flexibel.

In einer alternativen nicht erfindungsgemäßen Ausführungsform ist die Haftkraft auf Basis von elektrostatischen Kräften zwischen dem Etikett und dem Etikettentransportband vorgesehen. Diese elektrostatischen Kräfte können im Bereich der Spendekante oder am Anfang des Etikettentransportbands erzeugt werden.

Vorzugsweise ist das Etikettentransportband zur Aufnahme einer Reihe von Etiketten vorgesehen, um diese in einem Arbeitsschritt auf eine Reihe von Packungen beispielsweise in einer Tiefziehverpackungsmaschine aufzubringen, wodurch die Etikettierleistung (definiert durch aufgebrachte Etiketten pro Zeiteinheit) gesteigert wird.

Alternativ ist eine besondere Ausführung vorgesehen, bei der mehrere Reihen von Etiketten an das Etikettentransportband übertragbar sind, um eine Gruppe von Etiketten, umfassend mehrere Reihen und mehrere Spuren, zu bilden, wodurch die Etikettierleistung weiter gesteigert werden kann. Im Fall einer Gruppe ist per Definition eine Reihe quer und eine Spur längs zur Transportrichtung des Etikettentransportbands ausgerichtet.

Bei einem Verfahren zum Betrieb einer oben beschriebenen Etikettiervorrichtung werden die Etiketten durch Haften mit ihrer klebenden Unterseite an dem zu etikettierenden Produkt von dem Etikettentransportband abgenommen.

Vorzugsweise werden dabei die Etiketten schälend von dem Etikettentransportband abgenommen, welches den Vorteil mit sich bringt, dass kein minimaler Durchmesser wie bei einer Spendekante notwendig ist, sondern ein großer Durchmesser möglich und geeignet ist. Dies führt zu einer Reduzierung der mechanischen Belastung auf das Etikettentransportband.

Die Geschwindigkeit des Etikettentransportbands und die Geschwindigkeit des zu etikettierenden Produkts sind bevorzugt synchronisiert, um die Positioniergenauigkeit der Etiketten auf den Produkten zu erhöhen und die Ansteuerung der Antriebe zu vereinfachen.

Im Folgenden wird ein vorteilhaftes Ausführungsbeispiel der Erfindung anhand einer Zeichnung näher erläutert. Im Einzelnen zeigen:

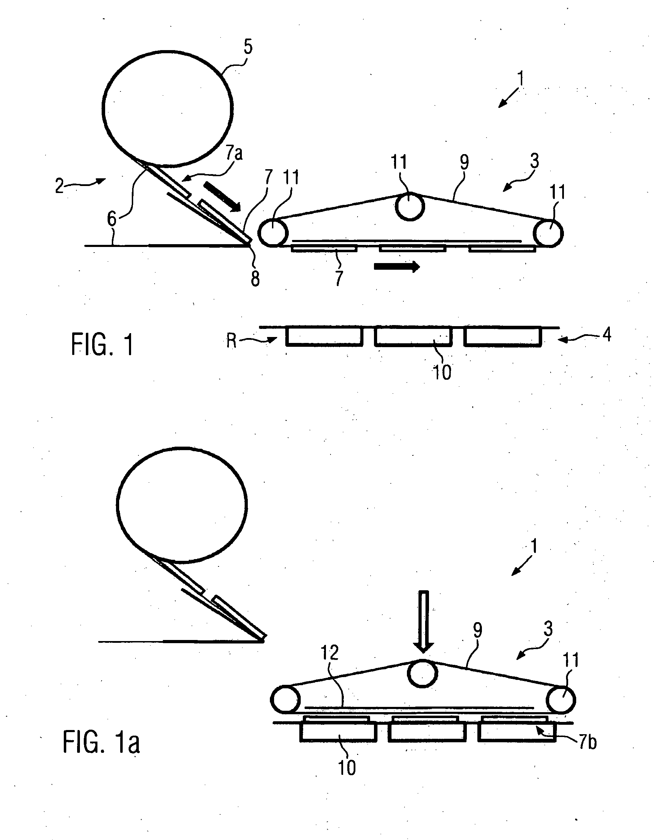

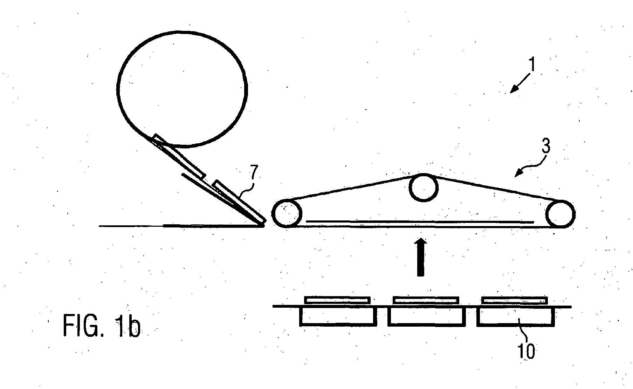

- Fig. 1: eine erfindungsgemäße Etikettiervorrichtung als Querbahnetikettierer in der Spendephase,
- Fig. 1 a: die Etikettiervorrichtung in ihrer Absetzphase,
- Fig. 1 b: die Etikettiervorrichtung nach dem Absetzen,
- Fig. 2: eine alternative Etikettiervorrichtung als Längsbahnetikettierer,
- Fig. 3: eine weitere alternative Etikettiervorrichtung zum Spenden eines Satzes von Etiketten zu Beginn der Spendephase,
- Fig. 3a: die Etikettiervorrichtung am Ende der Spendephase,
- Fig. 3b: die Etikettiervorrichtung in der Seitenansicht in der Absetzphase,
- Fig. 4: ein Etikettentransportband und
- Fig. 5: eine vergrößerte Darstellung eines Querschnitts des Etikettentransportbands.

Gleiche Komponenten sind in den Figuren durchgängig mit gleichen Bezugszeichen versehen.

Fig. 1 zeigt schematisch eine erfindungsgemäße Etikettiervorrichtung 1 mit einer Spendeeinheit 2 und einer Etikettenübertragungseinheit 3, die sich quer über einen Packungsverbund 4 beispielsweise einer Tiefziehverpackungsmaschine mit einer Transportrichtung erstreckt, die sich ihrerseits aus der Zeichnungsebene heraus erstreckt. Die Spendeeinheit 2 umfasst eine Rolle 5, von der ein Trägerband 6 mit Etiketten 7 über eine Spendekante 8 zum Spenden von Etiketten 7 gezogen wird. Die sich an der Spendekante 8 vom Trägerband 6 ablösenden Etiketten 7 werden von dem Etikettentransportband 9 übernommen. Dabei haftet die nicht-klebende Oberseite 7a der Etiketten 7 an einer nano- oder mikrostrukturierten Beschichtung 16 des Etikettentransportbands 9, speziell der Unterseite des Untertrums des Etikettentransportbandes 9. Entsprechend der Anzahl der in einer Reihe R zu etikettierenden Packungen 10 (in diesem Beispiel drei Packungen 10 bzw. zu etikettierende Produkte) werden drei Etiketten 7 von der Spendeeinheit 2 auf das Etikettentransportband 9 übergeben. Das Etikettentransportband 9 umläuft drei Umlenkrollen 11, von denen wenigstens eine mittels eines nicht dargestellten Elektromotors antreibbar ist.

Anschließend wird wie in Fig. 1 a dargestellt das Etikettentransportband 9 mittels eines nicht gezeigten Pneumatikantriebs oder Elektroantriebs in Richtung der Packungen 10 nach unten bewegt, um die drei Etiketten 7 mit ihrer klebenden Unterseite 7b auf die Packungen 10, auch als Produkt bezeichnet, aufzudrücken. Dabei unterstützt eine Druckplatte 12 den Andrückvorgang und verhindert, dass das Etikettentransportband 9 nach oben nachgeben kann. Der Anpressdruck ist somit über die Position der Übertragungseinheit 3 (zusammen mit der Druckplatte 12) oder die Verstellkraft des Pneumatikantriebs oder des Elektroantriebs einstellbar.

Danach wird die Übertragungseinheit 3 wieder nach oben in die Position bewegt, in der die nächsten drei Etiketten 7 von dem Etikettentransportband 9 aufgenommen werden, um eine nächste Reihe R von Packungen 10 zu etikettieren (siehe Figur 1 b).

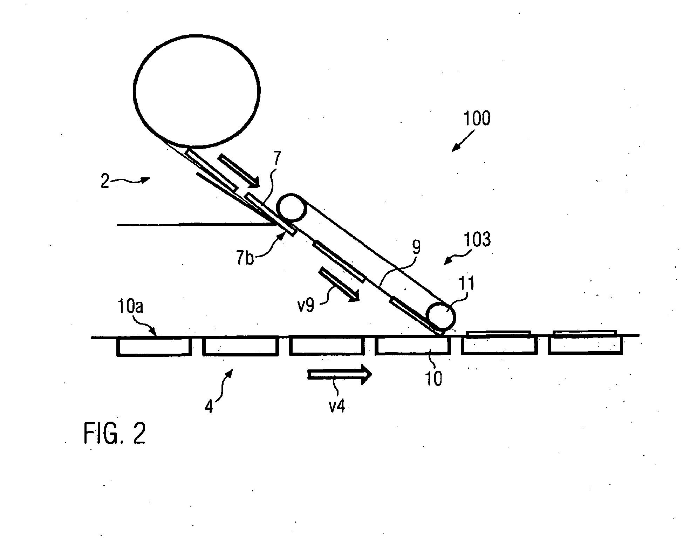

Fig. 2 zeigt schematisch eine alternative erfindungsgemäße Etikettiervorrichtung 100, umfassend eine Spendeeinheit 2 und eine Übertragungseinheit 103. Die Übertragungseinheit 103 übernimmt die Etiketten 7 gleichermaßen wie die Etikettiervorrichtung 3 in Fig. 1. Die Übertragungseinheit 103 ist schräg nach unten ausgerichtet und ist mit einer unteren Umlenkrolle 11 so konfiguriert, dass das Etikett 7 im Bereich der unteren Umlenkrolle 11 von der Packung 10 erfasst wird, da die klebende Unterseite 7b an der Oberseite 10a der Packung 10 haftet. Dabei wird das Etikett 7 schälend von dem Etikettentransportband 9 entfernt. Im Gegensatz zu einer Ausführung nach dem Stand der Technik, bei dem die Etiketten mit der klebenden Seite am Etikettentransportband transportiert und nur über eine Spendekante mit einem minimalem Radius von dem Etikettentransportband entfernbar sind, sind bei der erfindungsgemäßen Etikettiervorrichtung 100 große Radien an der unteren Umlenkrolle 11 von z. B. 10-20 mm möglich und somit die Dauerbelastung auf das Etikettentransportband deutlich minimiert. Die Vorschubbewegung v9 des Etikettentransportbands 9 und die Vorschubbewegung v4 des Packungsverbunds 400 sind vorzugsweise synchron mittels einer gemeinsamen nicht dargestellten Steuerung oder zweier miteinander kommunizierenden Steuerungen ausgeführt. Eine Veränderung des Abstands zweier benachbarter Etiketten 7 in Transportrichtung kann bei der Übergabe von der Spendeeinheit 2 auf das Etikettentransportband 9 oder zwischen den Abziehvorgängen benachbarter Etiketten 7 vom Etikettentransportband 9 durch die Packung 10 stattfinden.

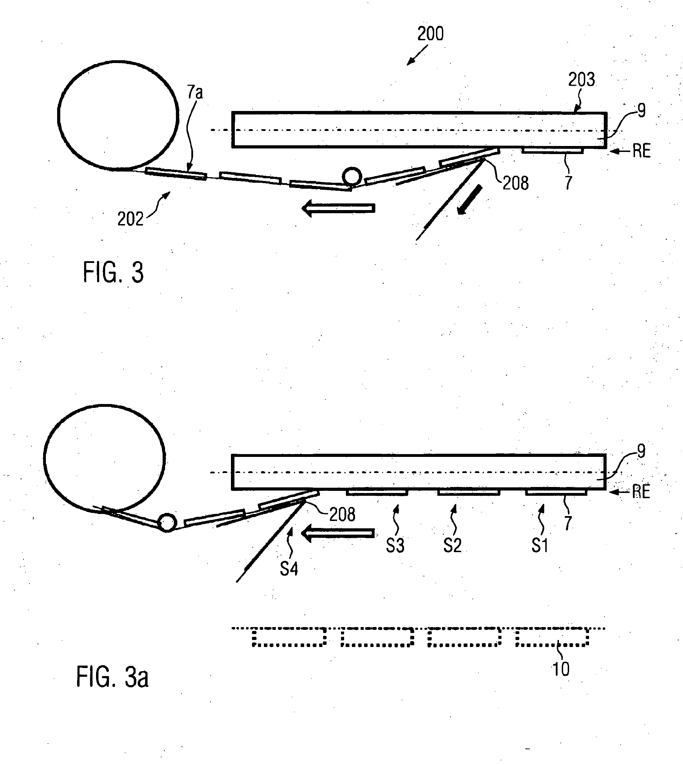

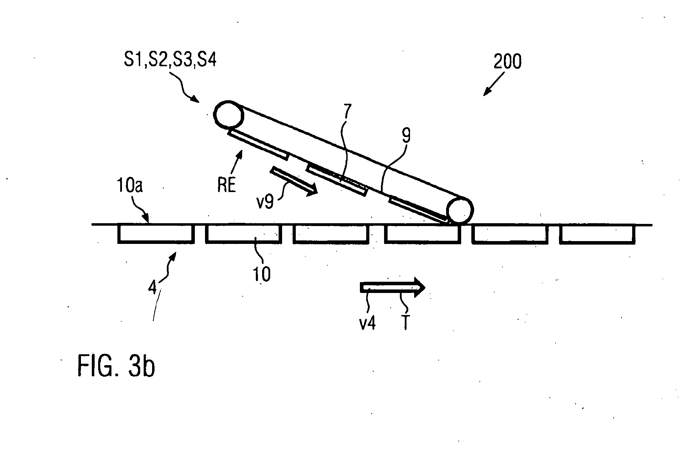

Fig. 3 zeigt schematisch eine weitere Ausführungsform der erfindungsgemäßen Etikettiervorrichtung 200, umfassend eine Übertragungsvorrichtung 203 und eine Spendeeinheit 202, die eine bewegbare Spendekante 208 aufweist, um eine Reihe RE von Etiketten 7 auf ein Etikettentransportband 9 der Übertragungseinheit 203 zu übergeben. Dabei haften die Etiketten 7 mit ihrer nicht-klebenden Oberseite 7a an dem Etikettentransportband 9. Durch eine Bewegung der Spendekante 208 nach links in Richtung der Rolle 5 und bei einem in Ruhe befindlichen Etikettentransportband 9, wie in Fig. 3a dargestellt, werden nacheinander Etiketten 7 einzeln an das Etikettentransportband 9 übergeben. Dabei kann auch ein veränderter Abstand zwischen zwei benachbarten Etiketten 7 in Bewegungsrichtung B erzeugt werden. Nach einer Übergabe von einer ersten Reihe RE mit vier Etiketten 7 führt das Etikettentransportband 9 eine Vorschubbewegung in Richtung der Packungen 10 aus, um anschließend eine zweite Reihe RE von vier Etiketten 7 aufzunehmen. Somit kann eine Gruppe von Etiketten 7 mit mehreren (z. B. drei) Reihen RE und mehreren (z. B. vier) Spuren S1 bis S4 aufgenommen werden.

Fig. 3b zeigt in einer schematischen Seitenansicht das Etikettentransportband 9 mit drei Reihen RE von Etiketten 7. In der Zeichenebene dahinter befinden sich vier Spuren S1 bis S4 von Etiketten 7, so dass sich zwölf Etiketten 7 auf der unteren Seite des Etikettentransportband 9 befinden. Die Gruppe von Etiketten 7 wird bei der Bewegung des Packungsverbundes 4, der vereinfacht den Folienvorzug einer Tiefziehverpackungsmaschine beispielsweise nach der Siegelstation und vor der Schneidstation darstellt, auf die Oberseite 10a der Packungen 10 aufgebracht. Bevorzugt entsprechen die Abstände zwischen zwei benachbarten Reihen RE von Etiketten 7 dem Abstand von zwei benachbarten Packungen 10 jeweils in Transportrichtung T. So können die Geschwindigkeiten v4 und v9 sind synchronisiert sein und ein positionsgenaues Anbringen der Etiketten 7 ist gewährleistet.

Es sind weitere Kombinationen mit einer unterschiedlichen Anzahl von Reihen RE und Spuren S1 bis S4 denkbar. In einer weiteren, aber nicht dargestellten Variante sind mehrere Spendeeinheiten 2 ohne eine bewegbare Spendekante 208 jeweils für eine Spur S1 bis S4 denkbar.

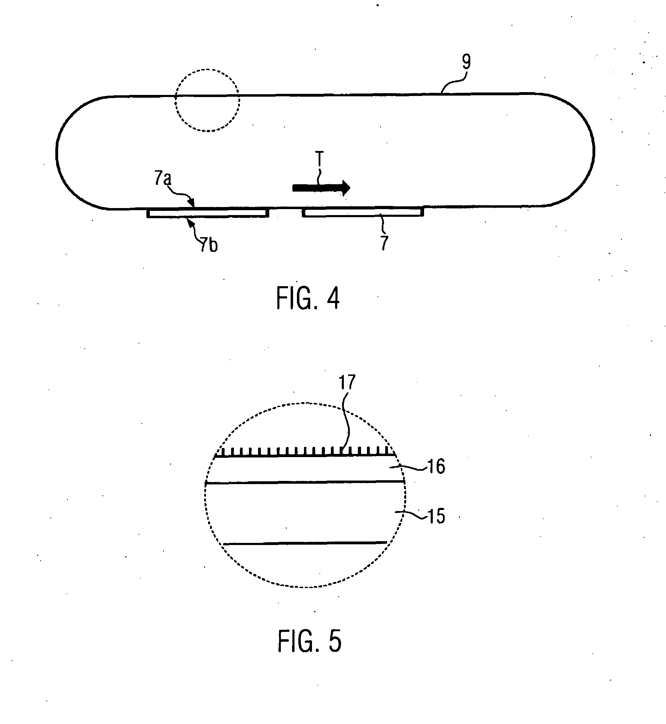

Fig. 4 zeigt eine bevorzugte Form des endlosen Etikettentransportbands 9, das in einer Transportrichtung T Etiketten 7 transportiert. Dabei ist die klebenden Seite 7b die Unterseite des Etiketts 7 und die nicht-klebende Seite 7a die Oberseite des Etiketts 7.

In der vergrößerten Darstellung eines Querschnitts des Etikettentransportbands 9, siehe Figur 5, ist eine Trägerschicht 15 und eine mit der Trägerschicht 15 verbundene nano- oder mikrostrukturierte Silikonbeschichtung 16 schematisch dargestellt. Die Beschichtung 16, die die Oberfläche des Etikettentransportbandes 9 darstellt, ist dauerhaft beispielsweise mittels Klebung aufgebracht oder direkt auf dem Trägermaterial aufgebracht. Es sind Haftelemente 17 vorgesehen, um Etiketten auf Basis von Van-der-Waals-Kräften mit ihrer nicht-klebenden Seite halten zu können, wobei wenigstens 15.000 der Haftelemente 17 pro cm² in dem Bereich des Etikettentransportbands 9 vorgesehen sind, der für den Transport der Etiketten 7 vorgesehen ist.

Das Trägermaterial 15 kann ein Gewebe, beispielsweise ein Textilgewebe sein, oder mehrschicht konfiguriert sein, um die Eigenschaften eines umlaufenden Riemens zu gewähren und zusätzlich eine verbesserte Oberfläche zum Aufbringen der Beschichtung 16 bereitzustellen.

## Patentansprüche

1. Etikettiervorrichtung (1, 100, 200), umfassend eine Spendeeinheit (2, 202) und eine Übertragungseinheit (3, 103, 203) mit wenigstens einem Etikettentransportband (9) zum Aufbringen eines Etiketts (7) auf ein Produkt (10), wobei das Etikettentransportband (9) eine Haftkraft aufweist, um Etiketten (7) mit ihrer nicht-klebenden Oberseite (7a) auf der Oberfläche des Etikettentransportbands (9) aufnehmen und transportieren zu können, **dadurch gekennzeichnet, dass** die Haftkraft durch eine nano- oder mikrostrukturierte Beschichtung (16) der Oberfläche des Etikettentransportbands (9) erzeugt wird, wobei die Beschichtung (16) eine Silikonbeschichtung ist.

2. Etikettiervorrichtung nach Anspruch 1, **dadurch gekennzeichnet, dass** die Haftkraft auf Van-der-Waals-Kräften beruht.

3. Etikettiervorrichtung nach Anspruch 1 oder 2, **dadurch gekennzeichnet, dass** die Beschichtung (16) eine Oberfläche mit mehr als 15.000 Haftelementen (17) pro cm², vorzugsweise mehr als 25.000 Haftelementen (17) pro cm², aufweist.

4. Etikettiervorrichtung nach einem der vorgehenden Ansprüche, **dadurch gekennzeichnet, dass** das Etikettentransportband (9) zur Aufnahme einer Reihe (RE) von Etiketten (7) vorgesehen ist.

5. Etikettiervorrichtung nach Anspruch 4, **dadurch gekennzeichnet, dass** das Etikettentransportband (9) zur synchronen Abgabe einer Reihe (RE) von Etiketten (7) auf einen Packungsverbund (4) vorgesehen ist.

6. Etikettiervorrichtung nach Anspruch 4 oder 5, **dadurch gekennzeichnet, dass** mehrere Reihen (RE) von Etiketten (7) an das Etikettentransportband (9) übertragbar sind, um eine Gruppe von Etiketten (7), umfassend mehrere. Reihen (RE) und mehrere Spuren (S1, S2, S3, S4), zu bilden.

## Claims

1. A labeler (1, 100, 200) comprising a dispenser (2, 202) and a transfer unit (3, 103, 203) with at least one label conveyor belt (9) for applying a label (7) to a product (10), wherein the label conveyor belt (9) has an adhesive force so as to be able to take up labels (7) with their non-adhesive upper surface (7a) on the surface of the label conveyor belt (9) and convey them,
**characterized in that**
the adhesive force is generated by a nano- or microstructured coating (16) on the surface of the label conveyor belt (9), wherein the coating (16) is a silicone coating.

2. A labeler according to claim 1, **characterized in that** the adhesive force is based on Van der Waals forces.

3. A labeler according to claim 1 or 2, **characterized in that** the coating (16) has a surface including more than 15,000 adhesion elements (17) per cm², preferably more than 25,000 adhesion elements (17) per cm².

4. A labeler according to one of the preceding claims, **characterized in that** the label conveyor belt (9) is provided for taking up a row (RE) of labels (7).

5. A labeler according to claim 4, **characterized in that** the label conveyor belt (9) is provided for synchronously transferring a row (RE) of labels (7) to a package group (4).

6. A labeler according to claim 4 or 5, **characterized in that** a plurality of rows (RE) of labels (7) can be transferred to the label conveyor belt (9) so as to form a group of labels (7) comprising a plurality of rows (RE) and a plurality of lanes (S1, S2, S3, S4).

## Revendications

1. Dispositif d'étiquetage (1, 100, 200), comprenant une unité de distribution (2, 202) et une unité de transfert (3, 103, 203) avec au moins une bande de transport d'étiquettes (9), pour l'application d'une étiquette (7) sur un produit (10), la bande de transport d'étiquettes (9) présentant une force d'adhérence en vue de pouvoir recevoir et transporter des étiquettes (7), avec leur face supérieure (7a) non adhésive, sur la surface de la bande de transport d'étiquettes (9), **caractérisé en ce que** la force d'adhérence est produite par un revêtement (16) à nano- ou microstructure de la surface de la bande de transport d'étiquettes (9), le revêtement (16) étant un revêtement de silicone.

2. Dispositif d'étiquetage selon la revendication 1, **caractérisé en ce que** la force d'adhérence repose sur des forces de Van-der-Waals.

3. Dispositif d'étiquetage selon la revendication 1 ou la revendication 2, **caractérisé en ce que** le revêtement (16) présente une surface avec plus de 15.000 éléments d'adhérence (17) par cm², de préférence plus de 25.000 éléments d'adhérence (17) par cm².

4. Dispositif d'étiquetage selon l'une des revendications précédentes, **caractérisé en ce que** la bande de transport d'étiquettes (9) est prévue pour recevoir une rangée (RE) d'étiquettes (7).

5. Dispositif d'étiquetage selon la revendication 4, **caractérisé en ce que** la bande de transport d'étiquettes (9) est prévue pour délivrer de manière synchrone une rangée (RE) d'étiquettes (7) sur un groupement d'emballage (4).

6. Dispositif d'étiquetage selon la revendication 4 ou la revendication 5, **caractérisé en ce que** plusieurs rangées (RE) d'étiquettes (7) peuvent être transférées à la bande de transport d'étiquettes (9), pour former un groupe d'étiquettes (7) comprenant plusieurs rangées (RE) et plusieurs voies (S1, S2, S3, S4).
